Europäisches Patentamt

European Patent Office

Office européen des brevets

(19)

(11) Veröffentlichungsnummer : **0 375 605 B1**

(12) # EUROPÄISCHE PATENTSCHRIFT

(45) Veröffentlichungstag der Patentschrift :
26.02.92 Patentblatt 92/09

(51) Int. Cl.$^5$ : **F16B 19/14**

(21) Anmeldenummer : **89810897.2**

(22) Anmeldetag : **22.11.89**

(54) **Verfahren zum Setzen von Befestigungselementen.**

(30) Priorität : **23.12.88 DE 3843392**

(43) Veröffentlichungstag der Anmeldung :
**27.06.90 Patentblatt 90/26**

(45) Bekanntmachung des Hinweises auf die
Patenterteilung :
**26.02.92 Patentblatt 92/09**

(84) Benannte Vertragsstaaten :
**AT BE CH DE ES FR GB IT LI NL SE**

(56) Entgegenhaltungen :
**AT-B- 265 996**
**AT-B- 348 730**
**DE-A- 3 446 158**
**DE-C- 2 849 139**

(73) Patentinhaber : **HILTI Aktiengesellschaft**
**FL-9494 Schaan (LI)**

(72) Erfinder : **Gschwend, Peter**
**Jedergasse**
**FL-9487 Gamprin (LI)**

(74) Vertreter : **Wildi, Roland**
**Hilti Aktiengesellschaft Patentabteilung**
**FL-9494 Schaan (LI)**

EP 0 375 605 B1

**Beschreibung**

Die Erfindung betrifft ein Verfahren zum Setzen von Befestigungselementen, wie Bolzen und Nägel, mittels eines durch hochgespannte Gase betriebenen Setzgerätes in Beton, Gestein und dergleichen Aufnahmematerial durch den Grund eines im Aufnahmematerial vorgefertigten Sackloches hindurch.

Zum Setzen von Befestigungselementen in Aufnahmematerialien, wie Beton, Gestein und dergleichen, ist es aus der DE-PS 28 49 139 bekannt, die Befestigungselemente mittels hochgespannter Gase, die durch Verbrennen einer Pulvertreibladung entstehen, durch den Grund eines vorgefertigten Sackloches hindurch in das Aufnahmematerial einzutreiben. Durch diese an sich bekannte Methode werden Ausplatzungen an der Oberseite des Aufnahmematerials vermieden und die Befestigungselemente lassen sich punktgenau plazieren.

Ein Mangel dieses Verfahrens besteht darin, dass der das Sackloch durchragende Abschnitt des Befestigungselementes zur Erzielung eines Verankerungswertes nicht beiträgt. Im Vergleich zur Länge des gesamthaft in das Aufnahmematerial einragenden Teiles des Befestigungselementes lassen sich so nur relativ kleine Verankerungswerte erzielen. Zudem werden bei radialem Spiel zwischen Befestigungselement und Wandung des Sackloches am Befestigungselement von aussen eingeleitete Querkräfte im Bereich des Sackloches vom Aufnahmematerial nicht oder nur teilweise aufgenommen. Dies kann zu ungünstiger Belastung der Verankerung führen.

Der Erfindung liegt die Aufgabe zugrunde, ein Verfahren zum Setzen von Befestigungselementen mittels durch hochgespannte Gase betriebener Setzgeräte in Aufnahmematerialien, wie Beton, Gestein und dergleichen, zu schaffen, mit dem nebst der Vermeidung von Ausplatzungen hohe Verankerungswerte erzielt werden.

Erfindungsgemäss wird die Aufgabe dadurch gelöst, dass in das Sackloch eine sich am Grund des Sackloches axial abstützende Hülse eingeführt wird und das Befestigungselement durch die Hülse hindurch in das Aufnahmematerial eingetrieben wird, wobei die Hülse vom Befestigungselement radial aufgeweitet wird.

Die Hülse führt unter axialer Abstützung am Grund des Sackloches beim Eintreibvorgang das Befestigungselement und wird vom Befestigungselement bei entsprechender Auslegung radial aufgeweitet. Dadurch verspannt sich einerseits das Befestigungselement in der Hülse und andererseits die Hülse im Sackloch.

Vorzugsweise wird in einem ersten Schritt die Hülse in das Sackloch eingeführt und in einem zweiten Schritt das Befestigungselement durch die Hülse hindurch in das Aufnahmematerial eingetrieben. Insbesondere für Serienanwendungen ist dies von Vorteil, indem nach dem Erstellen einer Reihe von Sacklöchern diese vorerst mit Hülsen bestückt werden. In der Folge lassen sich die Befestigungselemente mit einem durch hochgespannte Gase betriebenen Setzgerät eintreiben. Die hochgespannten Gase zum Betrieb dieser Setzgeräte können beispielsweise mittels eines Verbrennungsvorganges von Pulvertreibladungen oder Gasgemischen erzeugt werden. Darüberhinaus besteht die Möglichkeit, die für diesen Zweck benötigten hochgespannten Gase, beispielsweise Druckluft, direkt von einem Netz oder einem Speicher zu beziehen.

Ferner besteht die Möglichkeit, das Befestigungselement mit auf dessen setzrichtungsseitigem Bereich angeordneter Hülse unter Einführen derselben in das Sackloch durch die Hülse hindurch in das Aufnahmematerial einzutreiben. Durch diese vormontierte Anordnung der Hülse auf dem Befestigungselement erübrigt sich ein separates Einsetzen der Hülse. Zudem wird eine gesonderte Bereithaltung von Hülse und Befestigungselement vermieden.

Die vormontierte Einheit von Befestigungselement und Hülse kann entweder zusammen mittels der hochgespannten Gase gesetzt werden oder die Hülse wird nach dem manuellen Einführen in das Sackloch durch anschliessendes Eintreiben des Befestigungselementes mittels hochgespannter Gase aufgeweitet.

Die verwendete Hülse besteht zweckmässig aus duktilem Material, insbesondere Metall. Beispielsweise eignen sich Aluminium, Zink, Magnesium, ferritischer Stahl, austenitischer Stahl sowie Presslinge aus sinterfähigen Materialien (zB Email). Vorzugsweise wird zur Vermeidung von Korrosion rostbeständiges Material verwendet. Dank der Dehnungseigenschaft des duktilen Materials erübrigen sich konstruktive Massnahmen, wie Längsschlitzung, zur Erzielung von Dehnbarkeit zwecks Aufweitens der Hülse.

Mit Vorteil unterschreitet die Hülsenbohrung den Durchmesser des Schaftes des Befestigungselementes bis zu 20 %. Der Durchmesser der Hülsenbohrung kann demgemäss jenem des Schaftes des Befestigungselementes entsprechen. Insbesondere wenn aber der Durchmesser der Hülsenbohrung den Durchmesser des Schaftes des Befestigungselementes unterschreitet, wird ein zuverlässiges Verspannen und Aufweiten der Hülse durch das Befestigungselement erzielt, ohne dass druckmässige Ueberbeanspruchungen am Aufnahmematerial entstehen.

Zweckmässig wird die grösste durch das Aufweiten der Hülse erzielte Spannung zum Grund des Sackloches hin verlegt. Dies kann erreicht werden, indem sich die Hülsenbohrung in Eintreibrichtung verengt.

Nach einer weiteren Ausführungsform der Hülse wird diese Verlagerung der Spannung dadurch erzielt, dass die Hülsenbohrung eintreibrichtungsseitig durch einen Boden verschlossen ist. Vor dem Eindringen in das Aufnahmematerial durchdringt das Befestigungselement damit zuerst den Boden der Hülse. So kommt es zum radialen Eindringen des Boden-Materials im Ausmass des Volumens des den Boden durchsetzenden Abschnittes des Befestigungselementes in die Wandung des Sackloches.

Der Boden weist zweckmässig eine dem 0,4- bis 1-fachen des Aussendurchmessers der Hülse entsprechende Dicke auf. Dadurch ist ein günstiges Verhältnis von Durchdringungswiderstand zu Verspannungseffekt im Sackloch gewährleistet.

Die Erfindung wird nachstehend anhand von Zeichnungen, die Ausführungsbeispiele wiedergeben, näher erläutert. Es zeigen:

Fig. 1 ein Sackloch mit in dieses eingeführter Hülse und in einem Setzgerät gefasstem, in die Hülse ragendem Befestigungselement;

Fig. 2 die Anordnung nach Fig. 1, mit gesetztem Befestigungselement;

Fig. 3 eine fertige Befestigung mit einem erfindungsgemäss gesetzten Befestigungselement;

Fig. 4 eine weitere Ausführungsform einer Hülse zur Durchführung des erfindungsgemässen Verfahrens.

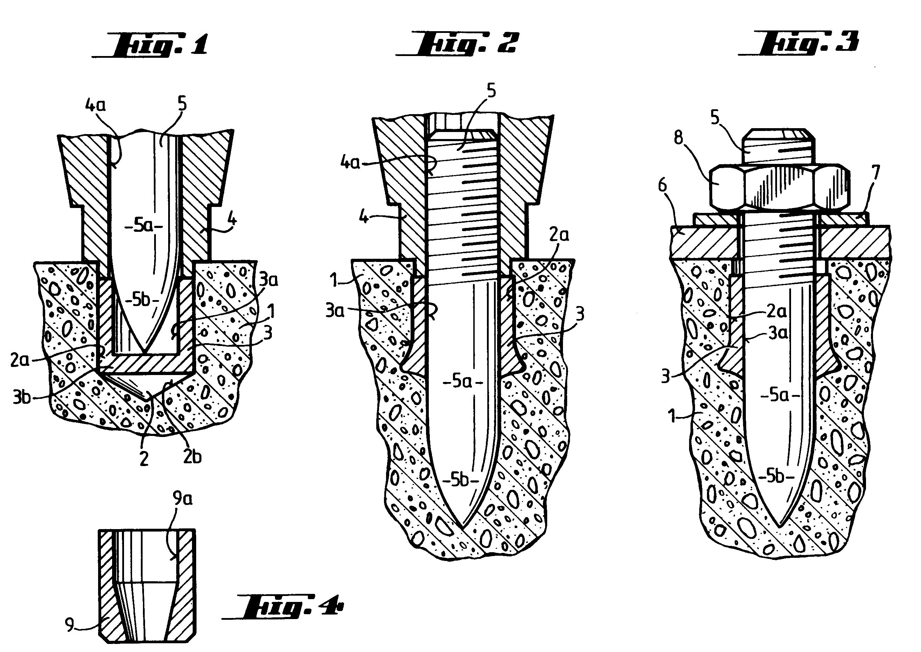

Die Fig. 1 zeigt ein Aufnahmematerial 1 in Form eines Bauteiles aus Beton. In diesem ist ein Sackloch 2 mit einer Wandung 2a und einem Grund 2b erstellt. In das Sackloch 2 wurde eine Hülse 3 eingeführt, die sich am Grund 2b abstützt. Die Hülse 3 weist eine Hülsenbohrung 3a auf, die zum Grund 2b hin durch einen Boden 3b verschlossen ist. Die Hülse 3 besteht aus duktilem, vorzugsweise nicht korrodierendem Material. In das Sackloch 2 ragt mündungsseitig, und dadurch zur Hülse 3 zentrisch ausgerichtet, der Lauf 4 eines Setzgerätes. Der Lauf 4 stützt sich dabei axial an der Oberseite des Aufnahmematerials 1 ab. In der Laufbohrung 4a ist ein Befestigungselement 5 in Form eines Gewindebolzens zwecks Eintreibens in das Aufnahmematerial 1 in an sich bekannter Weise angeordnet. Das Befestigungselement 5 weist einen zylindrischen Schaft 5a und endseitig eine in die Hülsenbohrung 3a eingreifende ogivale Spitze 5b auf. Der Durchmesser der Hülsenbohrung 3a unterschreitet den Durchmesser des Schaftes 5a um etwa 10 %.

Die in Fig. 1 dargestellte Anordnung kann durch gesondertes Einführen der Hülse 3 in das Sackloch 2 und anschliessendes Einführen des Befestigungelementes 5 mit der Spitze 5b in die Hülse 3 mit Hilfe des Setzgerätes erfolgen. Ebenso ist es möglich, Hülse 3 und Befestigungselement 5 gemeinsam in das Sackloch 2 einzuführen, indem die Hülse 3 vorgängig auf die Spitze 5b aufgesetzt wird.

Mittels des Setzgerätes wird das Befestigungselement 5 in das Aufnahmematerial 1 eingetrieben, wie dies die Fig. 2 zeigt. Dabei weitet der Schaft 5a aufgrund der Durchmesserdifferenz die Hülsenbohrung 3a auf und verspannt so die Hülse 3 im Axialbereich der Hülsenbohrung 3a im Sackloch 2. Ferner durchdringt das Befestigungselement 5 vorerst mit der Spitze 5b und sodann mit dem Schaft 5a den Boden 3b, was zu einer entsprechenden radialen Materialverdrängung im Bereich des Bodens 3b und dadurch zu einem formschlüssigen Eindringen des Materials in die Wandung 2a des Sackloches 2 führt. Das Befestigungselement 5 gelangt nach dem Durchstossen des Bodens 3b mit der Spitze 5b und dem an diese anschliessenden Bereich des Schaftes 5a durch den Grund 2b des Sackloches 2 hindurch in das Aufnahmematerial 1. So kommt eine Verankerung des Befestigungselementes 5 im Aufnahmematerial 1 einerseits direkt und andererseits indirekt über die Hülse 3 zustande.

Nach erfolgtem Setzvorgang wird das Setzgerät von der Befestigungsstelle abgenommen und ein zu befestigendes Teil, wie beispielsweise eine Lasche 6, am Aufnahmematerial 1 festgelegt. Hierzu dient eine Unterlagsscheibe 7 und eine auf das Befestigungselement aufschraubbare Mutter 8, wie dies die Fig. 3 zeigt.

Die Hülse 9 nach Fig. 4 kann anstelle der Hülse 3 gemäss den Fig. 1 bis 3 verwendet werden. Zur Erzielung der grössten Verspannung der Hülse 9 nahe des Grundes 2b des Sackloches 2 ist hier die Hülsenbohrung 9a teilweise in Eintreibrichtung verengt ausgebildet. Der Eintreibwiderstand des Bolzens 5 lässt sich dadurch gegenüber der Ausführungsform mit Boden 3b verkleinern.

## Patentansprüche

1. Verfahren zum Setzen von Befestigungselementen (5), wie Bolzen und Nägel, mittels eines durch hochgespannte Gase betriebenen Setzgerätes in Beton, Gestein und dergleichen Aufnahmematerial (1), durch den Grund (2b) eines im Aufnahmematerial (1) vorgefertigten Sackloches (2), hindurch, **dadurch gekennzeichnet**, dass in das Sackloch (2) eine sich am Grund (2b) des Sackloches (2) axial abstützende Hülse (3, 9) eingeführt wird und das Befestigungselement (5) durch die Hülse (3, 9) hindurch in das Aufnahmematerial (1) eingetrieben wird, wobei die Hülse (3, 9) vom Befestigungselement (5) radial aufgeweitet wird.

2. Verfahren nach Anspruch 1, dadurch gekennzeichnet, dass in einem ersten Schritt die Hülse (3, 9) in das Sackloch (2) eingeführt und in einem zweiten Schritt das Befestigungselement (5) durch die Hülse (3, 9) hindurch in das Aufnahmematerial (1) eingetrieben wird.

3. Verfahren nach Anspruch 1, dadurch gekennzeichnet, dass das Befestigungselement (5) mit auf dessen setzrichtungsseitigem Bereich angeordneter Hülse (3, 9) unter Einführen derselben in das Sackloch (2) durch die Hülse (3, 9) hindurch in das Aufnahmematerial (1) eingetrieben wird.

4. Verfahren nach einem der Ansprüche 1 bis 3, dadurch gekennzeichnet, dass für die Hülse (3, 9) duktiles Material, insbesondere Metall, verwendet wird.

5. Verfahren nach einem der Ansprüche 1 bis 4, dadurch gekennzeichnet, dass die Hülsenbohrung (3a, 9a) der Hülse (3, 9) den Durchmesser des Schaftes (5a) des Befestigungselementes (5) bis zu 20 % unterschreitet.

6. Verfahren nach einem der Ansprüche 1 bis 4, dadurch gekennzeichnet, dass die Hülsenbohrung (9a) der Hülse (9) sich in Eintreibrichtung verengt.

7. Verfahren nach einem der Ansprüche 1 bis 6, dadurch gekennzeichnet, dass die Hülsenbohrung (3a) der Hülse (3) eintreibrichtungsseitig durch einen Boden (3b) verschlossen ist.

8. Verfahren nach Anspruch 7, dadurch gekennzeichnet, dass der Boden (3b) der Hülse (3) eine dem 0,4- bis 1-fachen des Aussendurchmessers der Hülse (3) entsprechende Dicke aufweist.

## Claims

1. A method of setting fastening elements (5), such as bolts and nails, by means of a setting tool operated by high-pressure gases, into concrete, stone and similar receiving material (1), through the bottom (2b) of a blind-ended bore (2) prefabricated in the receiving material (1), characterised in that a sleeve (3, 9) supported axially against the bottom (2b) of the blind-end bore (2) is introduced into the blind-end bore (2) and the fastening element (5) is driven through the sleeve (3, 9) into the receiving material (1), in which respect the sleeve (3, 9) is expanded radially by the fastening element (5).

2. A method according to claim 1, characterised in that in a first step the sleeve (3, 9) is introduced into the blind-end bore (2) and in a second step the fastening element (5) is driven through the sleeve (3, 9) into the receiving material (1).

3. A method according to claim 1, characterised in that the fastening element (5) is driven with the sleeve (3, 9) arranged on the setting-direction-sided region thereof along with introduction of the same into the blind hole (2) through the sleeve (3, 9) into the receiving material (1).

4. A method according to one of claims 1 to 3, characterised in that ductile material, in particular metal, is used for the sleeve (3, 9).

5. A method according to one of claims 1 to 4, characterised in that the sleeve bore (3a, 9a) of the sleeve (3, 9) falls below the diameter of the shank (5a) of the fastening element (5) by up to 20%.

6. A method according to one of claims 1 to 4, characterised in that the sleeve bore (9a) of the sleeve (9) tapers in the driving-in direction.

7. A method according to one of claims 1 to 6, characterised in that the sleeve bore (3a) of the sleeve is closed at the driving-in direction side by a base (3b).

8. A method according to claim 7, characterised in that the base (3b) of the sleeve (3) has a thickness corresponding to 0.4 up to 1 times the outside diameter of the sleeve (3).

## Revendications

1. Procédé pour poser des éléments de fixation (5), par exemple des chevilles et des clous, au moyen d'un appareil de scellement actionné par des gaz sous haute pression dans du béton, de la roche et des matériaux de réception analogues (1) en traversant le fond (2b) d'un trou borgne (2) préparé dans le matériau de réception (1), **caractérisé en ce** que dans le trou borgne (2) est introduite une douille (3, 9) qui s'appuie axialement sur le fond (2b) du trou borgne (2), et que l'élément de fixation (5) est enfoncé à travers la douille (3, 9) dans le matériau de réception (1), ladite douille (3, 9) étant élargie radialement par l'élément de fixation (5).

2. Procédé selon la revendication 1, caractérisé en ce que dans une première étape la douille (3, 9) est engagée dans le trou borgne (2) et que l'élément de fixation (5) est enfoncé, au cours d'une seconde étape, au travers de la douille (3, 9) dans le matériau de réception (1).

3. Procédé selon la revendication 1, caractérisé en ce que l'élément de fixation (5) avec la douille (3, 9) disposée sur la section de celui-ci du côté pose est enfoncé dans le matériau de réception (1), au travers de la douille (3, 9), avec introduction de ladite douille dans le trou borgne (2).

4. Procédé selon l'une des revendications 1 à 3, caractérisé en ce que la douille (3, 9) est constituée d'un matériau ductile, en particulier de métal.

5. Procédé selon l'une des revendications 1 à 4, caractérisé en ce que le diamètre de l'alésage (3a, 9a) de la douille (3, 9) est inférieur jusqu'à 20 % au diamètre de la tige (5a) de l'élément de fixation (5).

6. Procédé selon l'une des revendications 1 à 4, caractérisé en ce que l'alésage (9a) de la douille (9) se rétrécit dans la direction de l'enfoncement.

7. Procédé selon l'une des revendications 1 à 6, caractérisé en ce que l'alésage (3a) de la douille (3) est fermé dans la direction d'enfoncement par un fond (3b).

8. Procédé selon la revendication 7, caractérisé en ce que le fond (3b) de la douille (3) présente une épaisseur qui correspond à 0,4 à 1 fois le diamètre extérieur de la douille (3).

**Fig. 1**

**Fig. 2**

**Fig. 3**

**Fig. 4**

EP 0 375 605 B1